# EUROPÄISCHE PATENTSCHRIFT

(11) **EP 4 216 004 B1**
(45) Veröffentlichungstag und Bekanntmachung des Hinweises auf die Patenterteilung: **02.04.2025**
(21) Anmeldenummer: 23151846.5
(22) Anmeldetag: 16.01.2023
(51) Int. Cl.: G05B 19/042, G05B 9/02

(54) **STEUERVORRICHTUNG UND VERFAHREN ZUM STEUERN EINER AUTOMATISIERTEN ANLAGE**
CONTROL DEVICE AND METHOD FOR CONTROLLING AN AUTOMATED SYSTEM
DISPOSITIF DE COMMANDE ET PROCÉDÉ DE COMMANDE D'UNE INSTALLATION AUTOMATISÉE

(30) Priorität: 21.01.2022 DE 102022101436
(43) Veröffentlichungstag der Anmeldung: 26.07.2023
(73) Patentinhaber: Pilz GmbH & Co. KG, 73760 Ostfildern (DE)
(72) Erfinder: von Haugwitz, Frank, 73760 Ostfildern (DE); Adams, Christian, 73760 Ostfildern (DE); Wöhrle, Stefan, 73760 Ostfildern (DE)
(74) Vertreter: Witte, Weller & Partner Patentanwälte mbB

(56) Entgegenhaltungen:
- WO-A1-2019/034928
- WO-A1-99/64938
- US-A1- 2019 056 723
- US-A1- 2021 022 037

## Beschreibung

Die vorliegende Erfindung betrifft eine Steuervorrichtung sowie ein entsprechendes Verfahren zum Steuern einer automatisierten Anlage.

Steuervorrichtungen sind im Bereich Automatisierungstechnik grundsätzlich bekannt. Ihre Aufgabe ist das Steuern und Regeln von technischen Anlagen. Technische Anlagen können Maschinen oder Prozesse sein. Eine Steuervorrichtung bezeichnet man dabei als modular, wenn sie sich aus einzelnen Komponenten, die jeweils unterschiedliche Aufgaben erfüllen, zusammensetzt. Die einzelnen Komponenten werden auch als Steuerungsmodule bezeichnet, die zu einer Einheit in einem Gehäuse oder einem Gehäuserahmen zusammengefasst werden. Regelmäßig verfügt eine solche Einheit mindestens über ein Kopfmodul als zentrale Verarbeitungseinheit sowie ein oder mehrere Module zur Verbindung mit der Peripherie der technischen Anlage. Letztere werden als Eingabe- und Ausgabe-(E/A)-Module bezeichnet.

Die Eingabemodule erfassen Zustände der technischen Anlage, indem sie Signale von Sensoren oder Eingabegeräten erfassen, die an Eingängen der Module anliegen. Die zentrale Verarbeitungseinheit wertet die erfassten Eingangssignale aus und erzeugt in Abhängigkeit der Eingangssignale sowie der gewünschten Steuerungs- oder Regelaufgabe Ausgangssignale, die über die Ausgabemodule ausgegeben werden. Über die Ausgangssignale werden Aktoren angesteuert, die letztendlich die gewünschte Reaktion der technischen Anlage herbeiführen.

Spezielle Steuervorrichtungen sind sichere Steuervorrichtungen, die auch als Sicherheitssteuerung oder Failsafe-(FS)-Steuerung bezeichnet werden. Diese erfüllen die gleichen Funktionen wie normale Steuervorrichtungen, unterscheiden sich aber darin, dass sie zusätzlich sicherheitsgerichtete Aufgaben wahrnehmen können und insbesondere eine sicherheitsgerichtete Reaktion der technischen Anlage herbeiführen. Hierfür verfügen diese Steuerungen intern über zusätzliche Hard- und Software, die das Ausführen einer sicherheitsgerichteten Funktion ermöglichen. Die sicherheitsgerichteten Funktionen gewährleisten einen gefahrlosen Betrieb der technischen Anlage im Sinne der einschlägigen Normen zur Maschinensicherheit, insbesondere EN 61508, EN 62061 und/oder ISO 13849-1.

Ein wesentliches Gütekriterium für eine sichere Steuervorrichtung ist deren Reaktionszeit. Die Reaktionszeit bezeichnet die Zeit, die vom Erfassen eines sicherheitsrelevanten Ereignisses bis hin zur Ausführung einer entsprechenden sicherheitsgerichteten Reaktion benötigt wird. Die Reaktionszeit beschreibt also beispielsweise die Zeitspanne zwischen dem Betätigen eines Not-Aus-Tasters und dem daraus resultierenden Stillsetzen eines gefährlichen Antriebs. Je kürzer die Reaktionszeit ist, desto höher die Güte einer sicheren Steuervorrichtung. Bei der Berechnung der Reaktionszeit ist dabei jeweils das ungünstigste zeitliche Verhalten anzunehmen. Hierbei spielt die Kommunikation zwischen den Modulen eine maßgebliche Rolle.

Die einzelnen Module der Steuervorrichtung sind für die Kommunikation untereinander über einen Kommunikationskanal miteinander verknüpft, wobei für die Bereitstellung einer sicheren Kommunikation (FS-Kommunikation) besondere Maßnahmen getroffen werden müssen. Letztere wirken sich unter anderem auf die Reaktionszeit aus. Beispielsweise werden bei der sicheren Kommunikation die zu übertragenden Daten regelmäßig redundant übertragen, um die Unempfindlichkeit der FS-Kommunikation gegenüber elektromagnetischen Störungen zu erhöhen Diese redundante Übertragung sichert jedoch keine zeitlichen Eigenschaften zu. Für die Berechnung der Reaktionszeiten einer Sicherheitsfunktion ist stets das ungünstigste zeitliche Verhalten anzunehmen. Die redundante Übertragung führt daher zu längeren Reaktionszeiten, da auch die Zeit berücksichtigt werden muss, bis zu der auch die redundante zweite Übertragung erfolgt ist.

Eine Möglichkeit die Reaktionszeit einer sicheren Steuerung positiv zu verbessern, liegt darin, die Kommunikation über einen speziell für sichere Kommunikation hergerichteten Kommunikationskanal erfolgen zu lassen. Ebenso besteht die Möglichkeit, die Uhren der einzelnen Steuerungsmodule zeitlich sicher zu synchronisieren, sodass ein definiertes Zeitverhalten innerhalb und zwischen den Modulen gewährleistet werden kann. Beide Möglichkeiten sind jedoch mit erheblichem Aufwand verbunden und entsprechend teuer in der Realisierung.

US 2019/0 056 723 A1 zeigt ein Verfahren, mit dem die korrekte Programmabfolge in einem Dual-Prozessor-Modul sichergestellt werden kann, bei dem zwei Prozessoren über einen gemeinsamen Speicher verfügen. Beide Prozessoren führen jeweils ein erstes Sicherheitsprogramm aus und erzeugen daraus jeweils einen Befehlsstrom. Zu einem oder mehreren Zeitpunkten während der Ausführung des ersten Sicherheitsprogramms liest einer der Prozessoren seinen Programmzählerwert bei einem gerade ausgeführten Befehl aus und erzeugt daraus einen aktuellen CRC-Wert. Der andere Prozessor liest seinen Programmzählerwert bei demselben gerade ausgeführten Befehl aus und erzeugt daraus einen aktuellen CRC-Wert für diesen Prozessor. Die Prozessoren tauschen die CRC-Werte aus und vergleichen sie miteinander. Stellt sich beim Vergleich heraus, dass die aktuellen CRC-Werte nicht übereinstimmen, wird eine Sicherheitsmaßnahme ausgelöst. WO2019/034928 offenbart ein System zur Steuerung eines Prozesses. Das System umfasst eine erste Steuervorrichtung, welche einen ersten Prozessor, eingerichtet zum Verarbeiten von ersten Daten, und eine erste Kommunikationsschnittstelle einer ersten Kommunikationseinheit, eingerichtet zum Empfangen der ersten Daten, umfasst, und eine zweite Steuervorrichtung, welche einen zweiten' Prozessor, eingerichtet zum Verarbeiten von zweiten Daten, und eine zweite Kommunikationsschnittstelle einer zweiten Kommunikationseinheit, eingerichtet zum Empfangen der zweiten Daten, umfasst.

WO99/64928 offenbart eine Steuereinrichtung für eine Maschine, Anlage oder ein Gerät mit einer ersten Steuereinheit und einer mit der ersten Steuereinheit im Signalaustausch stehenden zweiten Steuereinheit, die zur Überwachung der ersten Steuereinheit vorgesehen ist, und mit einem Vergleichsmodul , das zum Vergleich der Zustände der Steuereinheiten vorgesehen ist.

Vor diesem Hintergrund ist es eine Aufgabe der vorliegenden Erfindung eine Steuervorrichtung und ein Verfahren bereitzustellen, die eine günstigere Betrachtung der Reaktionszeit zulassen, ohne dass auf sichere Kommunikationseinrichtungen oder sicher synchronisierte Uhren zurückgegriffen werden muss.

Gemäß einem Aspekt der vorliegenden Offenbarung wird diese Aufgabe gelöst durch eine Steuervorrichtung gemäß Anspruch 1.

Gemäß einem weiteren Aspekt der vorliegenden Offenbarung wird diese Aufgabe ferner gelöst durch ein Verfahren zum Steuern einer automatisierten Anlage gemäß Anspruch 15.

Es ist somit eine Idee der vorliegenden Erfindung, die Steuerungsmodule so einzurichten, dass sie bei einer Kommunikation untereinander bestimmte Mindestdauern zwischen ausgewählten Ereignissen gewährleisten. D. h., die Steuermodule können einen vorbestimmten minimalen zeitlichen Abstand zwischen zwei Ereignissen garantieren. Es hat sich gezeigt, dass durch das Festlegen dieser Mindestabstände eine tatsächliche Reaktionszeit zwar nicht verringert werden kann, die Zusicherung dieser zeitlichen Eigenschaften jedoch die Berechnung des ungünstigsten zeitlichen Verhaltens (Worst-Case-Betrachtung) positiv beeinflusst.

Ohne die Festlegung der besagten minimalen zeitlichen Abstände gibt es keine funktionalsichere Garantie kleiner als die gesamte Umlaufzeit (Round-Trip-Zeit) der Prozessdaten vom Sender über den Empfänger zurück zum Sender. Durch das Festlegen der minimalen zeitlichen Abstände hingegen werden bestimmte zeitliche Eigenschaften im Umlauf der Prozessdaten garantiert, die bei der Worst-Case-Betrachtung berücksichtigt werden können und dazu führen, dass eine bessere Annahme als die gesamte Umlaufzeit angenommen werden kann.

Die Ereignisse, zwischen denen die Steuerungsmodule den minimalen zeitlichen Abstand garantieren, sind so gewählt, dass ein Steuerungsmodul entweder alleine diesen Mindestabstand gewährleisten kann oder aber zwei Steuerungsmodule den Abstand gemeinsam gewährleisten können, ohne hierfür zeitlich miteinander synchronisiert zu sein. Beide Varianten kommen somit ohne eine funktionalsichere Synchronisation zwischen den Modulen aus. Ebenso benötigen beide Varianten grundsätzlich keine zusätzlichen Hardwareeinrichtungen, sondern lassen sich vollständig in Software implementieren. Die verbesserte Worst-Case-Betrachtung lässt sich somit auf einfache und kostengünstige Weise realisieren sowie bei bereits bestehenden Anlagen leicht nachrüsten. Die eingangs genannte Aufgabe ist damit vollständig gelöst.

Gemäß einer bevorzugten Ausgestaltung weist die Steuervorrichtung folgendes weitere Merkmal auf:
a. Das erste Steuerungsmodul und das zweite Steuerungsmodul garantieren die erste Mindestdauer Δ1 und/oder die dritte Mindestdauer Δ3, indem sie die Prozessdaten redundant übertragen und zeitliche Eigenschaften zusichern.

Gemäß dieser Ausgestaltung erfolgt die Kommunikation zwischen den Steuerungsmodulen mittels redundanter Übertragung der Prozessdaten. Zusätzlich zu der redundanten Übertragung wird jedoch noch eine zeitliche Eigenschaft der redundanten Übertragung durch die jeweiligen Module garantiert. Auf diese Weise lässt sich ein minimaler zeitlicher Abstand zwischen der Erstellung und der Verarbeitung der Prozessdaten auf den beiden unterschiedlichen Steuerungsmodulen festlegen.

Gemäß einer weiteren Ausgestaltung weist die Steuervorrichtung die folgenden weiteren Merkmale auf:
a. Das erste Steuerungsmodul überträgt die Prozessdaten redundant, indem es eine erste Instanz der Prozessdaten zu einem Zeitpunkt tₐ in einen Sendepuffer des Kommunikationskanals verschiebt und eine zweite Instanz der Prozessdaten zu einem Zeitpunkt t_{b} in den Sendepuffer des Kommunikationskanals verschiebt.
b. Das erste Steuerungsmodul sichert die zeitlichen Eigenschaften zu, indem es eine Zeitüberwachung, die einen zeitlichen Abstand zwischen den Zeitpunkten tₐ und t_{b} bestimmt, startet und die zweite Instanz der Prozessdaten nur in den Sendepuffer verschiebt, wenn der zeitliche Abstand einen definierten Mindestwert überschreitet.

Gemäß dieser Ausgestaltung sichert das erste Steuerungsmodul eine Mindestlaufzeit zwischen dem Aussenden einer ersten Instanz der Prozessdaten und dem Aussenden einer zweiten Instanz der Prozessdaten zu, indem es den zeitlichen Abstand mittels einer Zeitüberwachung überwacht und die zweite Instanz der Prozessdaten nur dann versendet, wenn der minimale zeitliche Abstand eingehalten worden ist. Damit wird das erste Steuerungsmodul befähigt im Zusammenspiel mit einem entsprechend ausgebildeten zweiten Steuerungsmodul, einen minimalen zeitlichen Abstand (Mindestdauer Δ1 oder Δ3) zwischen Erstellung der Prozessdaten und Verarbeitung der Prozessdaten auf unterschiedlichen Steuerungsmodulen zu garantieren. Eine funktionalsichere Synchronisierung der unterschiedlichen Steuerungsmodule ist hierfür nicht erforderlich.

Es versteht sich, dass auch das zweite Steuerungsmodul analog ausgebildet sein kann, wenn dieses als Sender der Prozessdaten agiert. Daher kann gemäß einer weiteren Ausgestaltung die Steuervorrichtung die folgenden weiteren Merkmale aufweisen:
a. Das zweite Steuerungsmodul überträgt die Rückantwort auf die Prozessdaten redundant, indem es eine erste Instanz der Rückantwort zu einem Zeitpunkt tₐ in einen Sendepuffer des Kommunikationskanals verschiebt und eine zweite Instanz der Rückantwort zu einem Zeitpunkt t_{b} in den Sendepuffer des Kommunikationskanals verschiebt; und
b. Das zweite Steuerungsmodul sichert die zeitlichen Eigenschaften zu, indem es eine Zeitüberwachung, die einen zeitlichen Abstand zwischen den Zeitpunkten tₐ und t_{b} bestimmt, startet und die zweite Instanz der Rückantwort nur in den Sendepuffer (84) verschiebt, wenn der zeitliche Abstand einen definierten Mindestwert überschreitet.

Gemäß dieser Ausgestaltung kann somit auch die Rückantwort redundant versandt werden.

Gemäß einer weiteren Ausgestaltung weist die Steuervorrichtung das folgende weitere Merkmal auf:
a. Das zweite Steuerungsmodul sichert die zeitlichen Eigenschaften zu, indem es eine Zeitüberwachung, die einen zeitlichen Abstand zwischen einem Empfang einer ersten Instanz der Prozessdaten und einem Empfang einer zweiten Instanz der Prozessdaten bestimmt, nur dann startet, wenn das zweite Steuerungsmodul eine erste Instanz der Prozessdaten empfängt.

Gemäß dieser Ausgestaltung verfügt das zweite Steuerungsmodul über eine weitere Zeitüberwachungseinrichtung, die unabhängig von einer Zeitüberwachung eines ersten Steuerungsmoduls ausgebildet sein kann. Indem das zweite Steuerungsmodul diese Zeitüberwachung nur startet, wenn es eine erste Instanz der Prozessdaten empfangen hat, wird das zweite Steuerungsmodul befähigt im Zusammenspiel mit einem entsprechend ausgebildeten ersten Steuerungsmodul, einen minimalen zeitlichen Abstand (Mindestdauer Δ1 oder Δ3) zwischen Erstellung der Prozessdaten und der Verarbeitung der Prozessdaten auf unterschiedlichen Steuerungsmodulen zu garantieren, ohne dass die unterschiedlichen Steuerungsmodule funktionalsicher zeitlich synchronisiert sind. Auch hier kann das erste Steuerungsmodul analog ausgebildet sein, wenn dieses als Empfänger der Prozessdaten agiert.

Analog zur Übertragung der Prozessdaten kann auch die Rückantwort entsprechend übertragen werden. Daher kann gemäß einer weiteren Ausgestaltung die Steuervorrichtung das folgende weitere Merkmale aufweisen:
a. Das erste Steuerungsmodul sichert die zeitlichen Eigenschaften zu, indem es eine Zeitüberwachung, die einen zeitlichen Abstand zwischen einem Empfang einer ersten Instanz der Rückantwort und einem Empfang einer zweiten Instanz der Rückantwort bestimmt, nur dann startet, wenn das erste Steuerungsmodul eine erste Instanz der Rückantwort empfängt.

Gemäß einer weiteren Ausgestaltung weist die Steuervorrichtung das folgende weitere Merkmal auf:
a. Die erste Instanz der Prozessdaten und die zweite Instanz der Prozessdaten sind redundante Datentelegramme der Prozessdaten; und
b. Das erste Steuerungsmodul versieht die erste Instanz der Prozessdaten und die zweite Instanz der Prozessdaten mit fortlaufenden Instanz-Nummern.

Ferner, gemäß einer weiteren Ausgestaltung,
a. Die erste Instanz der Rückantwort und die zweite Instanz der Rückantwort sind redundante Datentelegramme der Rückantwort; und
b. Das zweite Steuerungsmodul versieht die erste Instanz der Rückantwort und die zweite Instanz der Rückantwort mit fortlaufenden Instanz-Nummern.

Gemäß diesen Ausgestaltungen wird für die Übertragung der redundanten Datenpakete eine Instanz-Nummer eingeführt. Die Instanz-Nummer bezieht sich auf die redundanten Instanzen bzw. redundanten Pakete eines bestimmten Prozessdatenobjekts der Prozess-daten, das redundant übertragen wird. Die Instanz-Nummer dient dazu diese unterscheidbar und sortierbar zu machen. Mittels der Instanz-Nummern kann ein Steuerungsmodul auf einfache Weise beurteilen, ob Prozessdaten einer ersten Instanz oder einer Folgeinstanz empfangen worden sind. Es versteht sich, dass die Erfindung nicht auf eine erste und zweite Instanz beschränkt ist, sondern drei oder mehr Instanzen übermittelt werden können, die paarweise oder insgesamt zur Sicherstellung der Mindestabstände herangezogen werden.

Gemäß einer weiteren Ausgestaltung weist die Steuervorrichtung die folgenden weiteren Merkmale auf:
a. Das zweite Steuerungsmodul startet zu dem zweiten Zeitpunkt t₂ eine Zeitüberwachung, die einen zeitlichen Abstand zu dem dritten Zeitpunkt t₃ bestimmt; und
b. Das zweite Steuerungsmodul erstellt die Rückantwort erst zu dem dritten Zeitpunkt t₃ nach Ablauf der zweiten Mindestdauer Δ2.

Gemäß dieser Ausgestaltung kann das zweite Steuerungsmodul die zweite Mindestdauer Δ2 auf einfache Weise garantieren. Hierfür ist es ausreichend, dass das zweite Steuerungsmodul den zeitlichen Abstand zwischen zwei Ereignissen überwacht, die im Einflussbereich des zweiten Steuerungsmoduls liegen. Eine zeitliche Überwachung dieses Zeitraums lässt sich somit besonders leicht und unabhängig von anderen Modulen realisieren. Die Ausgestaltung trägt weiter dazu bei, die Zusicherung einer definierten zeitlichen Eigenschaft besonders leicht zu implementieren.

Gemäß einer weiteren Ausgestaltung weist die Steuervorrichtung das folgende weitere Merkmal auf:
a. Das erste Steuerungsmodul sendet und empfängt die Prozessdaten zyklisch, überwacht als eine Umlaufzeit eine Anzahl von Zyklen zwischen dem ersten Zeitpunkt t₁ und dem vierten Zeitpunkt t₄ und löst eine sicherheitsgerichtete Aktion aus, falls die Umlaufzeit einen definierten Wert überschreitet.

Das erste Steuerungsmodul kann somit eine Umlaufzeit überwachen und eine entsprechende sicherheitsgerichtete Reaktion auslösen, falls die Prozessdaten nicht innerhalb einer definierten Umlaufzeit verarbeitet werden.

Gemäß einer weiteren Ausgestaltung weist die Steuervorrichtung die folgenden weiteren Merkmale auf:
a. Das erste Steuerungsmodul verarbeitet die Prozessdaten gemäß einem ersten lokalen Zyklus.
b. Das zweite Steuerungsmodul verarbeitet die Prozessdaten gemäß einem zweiten lokalen Zyklus.
c. Der erste lokale Zyklus und der zweite lokale Zyklus haben die gleiche Periodendauer.
d. Die erste Mindestdauer Δ1, die zweite Mindestdauer Δ2 und die dritte Mindestdauer Δ3 sind jeweils kürzer als die Periodendauer.

Gemäß dieser Ausgestaltung sind die Mindestdauern Δ1 - Δ3 jeweils kleiner als die Periodendauer der jeweiligen Verarbeitungszyklen und lassen sich somit problemlos als festgelegte zeitliche Eigenschaften in die Verarbeitungszyklen integrieren.

Gemäß einer weiteren Ausgestaltung weist die Steuervorrichtung das folgende weitere Merkmal auf:
a. Das erste Steuerungsmodul sendet innerhalb des ersten lokalen Zyklus eine erste Instanz und mindestens eine zweite Instanz der Prozessdaten an das zweite Steuerungsmodul.

Gemäß dieser Ausgestaltung überträgt das erste Steuerungsmodul die Prozessdaten innerhalb eines einzelnen lokalen Arbeitszyklus mindestens zweimal. Auf diese Weise kann ein Mindestabstand zusammen mit einem Empfängermodul leicht realisiert werden.

Gemäß einer weiteren Ausgestaltung weist die Steuervorrichtung das folgende weitere Merkmal auf:
a. Das zweite Steuerungsmodul sendet innerhalb des zweiten lokalen Zyklus eine erste Instanz und mindestens eine zweite Instanz der Rückantwort der Prozessdaten an das erste Steuerungsmodul.

Gemäß dieser Ausgestaltung überträgt auch das zweite Steuerungsmodul die Rückantwort innerhalb eines einzelnen lokalen Arbeitszyklus mindestens zweimal. Auf diese Weise kann auch ein Mindestabstand zusammen mit einem ersten Steuerungsmodul als Empfängermodul leicht realisiert werden.

Gemäß einer bevorzugten Ausgestaltung weist die Steuervorrichtung folgendes weitere Merkmal auf:
a. Das erste Steuerungsmodul und das zweite Steuerungsmodul haben je einen fehlersicher implementierten Verarbeitungsteil, der eine fehlersichere Ausführung eines Anwenderprogramms und/oder eine fehlersichere Ein- und Ausgabe der Prozessdaten ermöglicht.

Der fehlersicher implementierte Verarbeitungsteil kann beispielsweise eine IEC61131 PLC Ressource eines Kopfmoduls der Steuervorrichtung sein und eine fehlersichere Ausführung eines vom Anwender erzeugten Anwenderprogramms ermöglichen. Bezogen auf Ein- und Ausgabemodule kann der fehlersicher implementierte Verarbeitungsteil eine fehlersichere Ein- und Ausgabe der Prozessdaten innerhalb dieser Module gewährleisten.

Gemäß einer bevorzugten Ausgestaltung weist die Steuervorrichtung folgendes weitere Merkmal auf:
a. Der fehlersicher implementierte Verarbeitungsteil ist eingerichtet, eine fehlersichere Kommunikation über den Kommunikationskanal unabhängig von einer Ausgestaltung des Kommunikationskanals zu gewährleisten.

Gemäß dieser Ausgestaltung sind das erste Steuerungsmodul und das zweite Steuerungsmodul so eingerichtet, dass sie eine fehlersichere Kommunikation über einen nicht fehlersicheren Kommunikationskanal ermöglichen (Black-Channel-Prinzip). Gleichzeitig können die Maßnahmen zur Zusicherung der zeitlichen Eigenschaften, wie vorstehend beschrieben, auch bei Anwendung dieses Prinzips verwendet werden.

Gemäß einer bevorzugten Ausgestaltung weist die Steuervorrichtung folgendes weitere Merkmal auf:
a. Der fehlersicher implementierte Verarbeitungsteil ist eingerichtet, eine fehlersichere Zeitüberwachung auf dem ersten Steuerungsmodul und dem zweiten Steuerungsmodul zu ermöglichen.

Gemäß dieser Ausgestaltung können die Steuerungsmodule eine fehlersichere Zeitüberwachung gewährleisten, beispielsweise indem die Zeitüberwachung von zwei getrennten Verarbeitungseinheiten redundant ausgeführt wird, die ihre Ergebnisse gegenseitig vergleichen und überwachen. Die zugesicherten zeitlichen Eigenschaften können so auf einfache Weise bereitgestellt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Ausführungsbeispiels einer Steuervorrichtung mit einem ersten Steuerungsmodul und einem zweiten Steuerungsmodul,
- Fig. 2: eine schematische Darstellung einer Kommunikation zwischen zwei Steuerungsmodulen gemäß einem ersten Aspekt,
- Fig. 3: eine schematische Darstellung einer Kommunikation zwischen zwei Steuerungsmodulen gemäß einem zweiten Aspekt,
- Fig. 4: eine schematische Darstellung einer Datenverarbeitung innerhalb eines Steuerungsmoduls gemäß einem dritten Aspekt,
- Fig. 5: ein Sequenzdiagramm einer redundanten Übertragung von Prozessdaten einer ersten Instanz und einer zweiten Instanz,
- Fig. 6: ein Sequenzdiagramm der redundanten Übertragung gemäß Fig. 5 für den Fall, dass die Prozessdaten der ersten Instanz verloren gehen, und
- Fig. 7: ein Sequenzdiagramm der redundanten Übertragung gemäß Fig. 5 für den Fall, dass die Prozessdaten der zweiten Instanz verloren gehen.

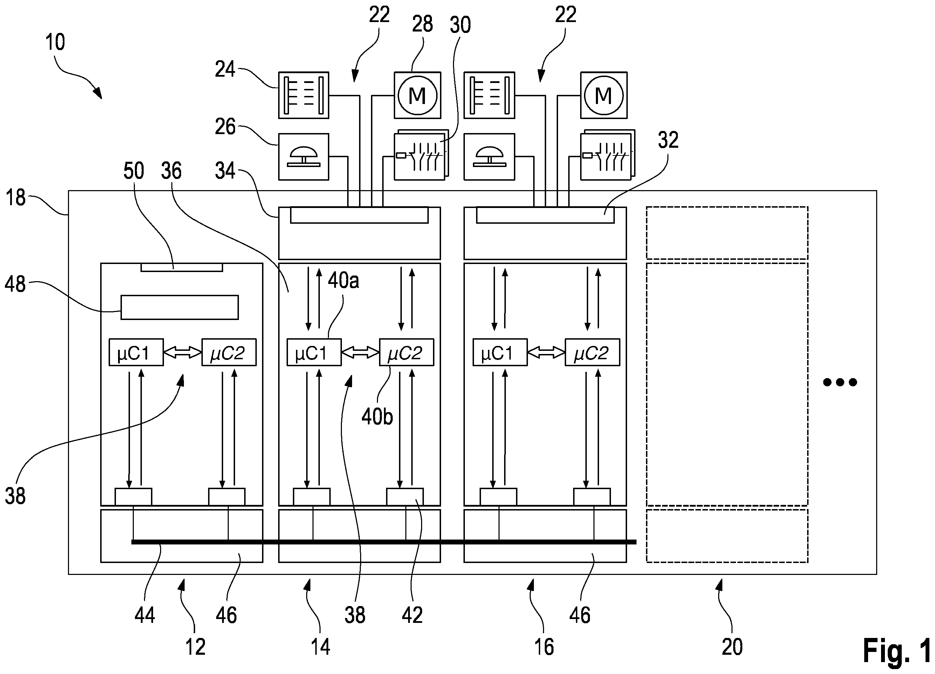

Fig. 1 zeigt in einer schematischen Darstellung eine Steuervorrichtung gemäß einem Ausführungsbeispiel der vorliegenden Erfindung. Die Steuervorrichtung ist in ihrer Gesamtheit hier mit Bezugsziffer 10 bezeichnet.

Die Steuervorrichtung 10 ist eine modulare Steuervorrichtung, die sich im hier gezeigten Ausführungsbeispiel aus drei Einzelmodulen zusammensetzt. Ein erstes Steuerungsmodul 12 bildet eine zentrale Verarbeitungseinheit der Steuervorrichtung 10 (Kopfmodul). Ein zweites Steuerungsmodul 14 und ein drittes Steuerungsmodul 16 sind im vorliegenden Ausführungsbeispiel Ein- und Ausgabemodule, über die die Steuervorrichtung 10 mit einer technischen Anlage verbunden ist.

Die Module 12-16 sind einzelne Baugruppen, die zusammen in einem Gehäuse 18 oder einem Gehäuserahmen angeordnet sind. Üblicherweise sind die Module einzelne Einheiten, die zusammengesteckt werden, um die Steuervorrichtung 10 zu bilden. Auf diese Weise lässt sich die Steuervorrichtung 10 individuell konfektionieren und an die jeweilige Steuer- und Regelungsaufgabe anpassen. Die Erweiterbarkeit ist hier durch einen weiteren Modulsteckplatz 20 als Platzhalter für weitere Module angedeutet. Die Steuervorrichtung 10 ist somit nicht auf die hier dargestellte Anzahl von Modulen beschränkt, sondern kann um zusätzliche Module erweiterbar sein.

Eine Steuervorrichtung 10 der genannten Art wird üblicherweise in einem Schaltschrank (hier nicht dargestellt) untergebracht und die Ein- und Ausgabemodule 14, 16 sind direkt oder indirekt (bspw. über einen Feldbus) mit der Peripherie 22 der technischen Anlage verbunden. Die Peripherie kann Eingabegeräte, wie beispielsweise Lichtschranken 24 oder Not-Aus-Taster 26, sowie Ausgabegeräte, die als Aktoren wirken, aufweisen. Aktoren können beispielsweise Motoren 28 oder Schütze 30 sein. Es versteht sich, dass die Erfindung nicht auf die gezeigten Peripherieelemente beschränkt ist.

Im vorliegenden Ausführungsbeispiel weisen das zweite Steuerungsmodul 14 und das dritte Steuerungsmodul 16 jeweils Verbindungen zu Eingabegeräten und Ausgabegeräten auf. Mit anderen Worten weisen hier beide Steuerungsmodule 14, 16 jeweils Ein- und Ausgänge 32 auf, über die die Module mit der Peripherie 22 verbunden sind. Es versteht sich, dass in anderen Ausführungen ein Steuerungsmodul auch nur Eingänge oder nur Ausgänge besitzen kann. Die Ein- und Ausgänge 32 der Module sind vorzugsweise in einem separaten Modulteil (Anschluss-Modulteil 34) angeordnet.

Die Verarbeitung der Ein- und Ausgangssignale, die an den Ein- und Ausgängen 32 anliegen, erfolgt in einem Logik-Modulteil 36 der Steuerungsmodule. Das Logik-Modulteil 36 weist in bevorzugten Ausführungsbeispielen einen fehlersicheren Verarbeitungsteil 38 auf, der sich beispielsweise aus zwei separaten Verarbeitungseinheiten 40a und 40b zusammensetzt. Die Verarbeitungseinheiten 40a, 40b können Mikrocontroller, ASICs oder FPGAs, vorzugsweise unterschiedlicher Bauart, sein. Darüber hinaus verfügt das Logik-Modulteil 36 über Schnittstellen 42 zu einem Kommunikationsbus 44. Die Schnittstellen 42 können wie die Verarbeitungseinheiten 40a, 40b redundant ausgelegt sein. Grundsätzlich verfügen die Steuerungsmodule 12-16 über einen fehlersicheren Aufbau im Sinne von SIL2 oder höher gemäß EN 61508 und/oder PL d oder höher gemäß ISO 13849-1.

Über den Kommunikationsbus 44 können die Steuerungsmodule der Steuervorrichtung 10 einen Kommunikationskanal untereinander einrichten. Insbesondere können die Steuerungsmodule 14, 16, die als Ein- und Ausgabemodule fungieren, über den Kommunikationsbus 44 mit dem Kopfmodul kommunizieren. Der Kommunikationsbus 44 kann durch Bus-Modulteile 46 der einzelnen Steuerungsmodule 12-16 gebildet werden. Hierbei können die aneinandergereihten Bus-Modulteile 46 eine sogenannte modulare Backplane bilden. Alternativ kann der Kommunikationsbus 44 auch durch eine feststehende Rückwand des Gehäuses 18 der Steuervorrichtung 10 gebildet werden.

Das erste Steuerungsmodul 12, das im vorliegenden Ausführungsbeispiel als Kopfmodul fungiert, verfügt über einen ähnlichen Logik-Modulteil 36 wie die Ein- und Ausgabemodule. Der fehlersichere Verarbeitungsteil 38 ist beim Kopfmodul eingerichtet, ein Anwenderprogramm abzuarbeiten. Dieses ist beispielsweise in einem Speicher 48 des Logik-Modulteils 36 hinterlegt. Die Abarbeitung des Anwenderprogramms kann nach dem Eingabe-Verarbeitung-Ausgabe-(EVA)-Prinzip erfolgen. In einem ersten Schritt erzeugt der Verarbeitungsteil 38 hierbei ein Prozessabbild der Eingänge (PAE) und führt anschließend sequenziell Anweisungen des Anwenderprogramms in Abhängigkeit des PAE aus. Abschließen schreibt der Verarbeitungsteil 38 ein Prozessabbild der Ausgänge (PAA), anhand dessen die Ausgänge gesteuert werden.

Das Einlesen der Eingänge sowie das Setzen der Ausgänge erfolgt über die Ein- und Ausgabemodule. Der fehlersichere Verarbeitungsteil 38 ist bei den Ein- und Ausgabemodulen dazu eingerichtet, eine fehlersichere Ein- und Ausgabe zu gewährleisten. Die Kommunikation zwischen den Modulen realisiert der Kommunikationsbus 44. Das erste Steuerungsmodul 12 ist in der vorliegenden Ausführung somit nicht direkt mit Ein- und Ausgängen 32 zur Peripherie versehen und kann deshalb ohne einen eigenen Anschluss-Modulteil 34 auskommen. Das erste Steuerungsmodul 12 kann jedoch eine zusätzliche Schnittstelle 50 aufweisen, über welche eine Verbindung zu anderen Steuervorrichtungen oder Diagnosegeräten herstellbar ist.

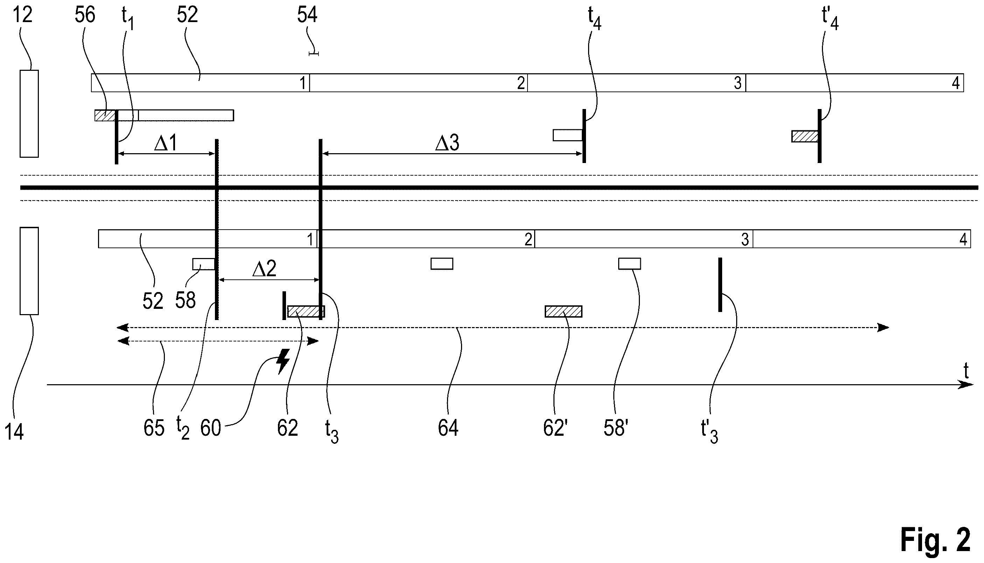

Anhand Fig. 2 wird im Folgenden die Kommunikation zwischen zwei Steuerungsmodulen erläutert. Fig. 2 zeigt in einer schematischen Darstellung beispielhaft die Übertragung eines Prozessabbilds der Eingänge zwischen einem Kopfmodul (erstes Steuerungsmodul 12) und einem Ein- und Ausgabemodul (zweites Steuerungsmodul 14) über den Kommunikationsbus 44. Fig. 2 zeigt insbesondere eine Worst-Case-Analyse einer fehlersicheren Übertragung eines PAE (FS-PAE).

In dem Diagramm gemäß Fig. 2 ist in Längsrichtung die Zeit t aufgetragen. Das erste Steuerungsmodul 12 (oben) und das zweite Steuerungsmodul 14 (unten) arbeiten in festgelegten, lokalen Zyklen 52 mit definierten Zykluszeiten. Die Zykluszeit ist die Zeit für die Abarbeitung eines Zyklus einschließlich aller Kommunikationsaufgaben. "Lokal" bedeutet in diesem Zusammenhang, dass die Zyklen des ersten Steuerungsmoduls 12 und des zweiten Steuerungsmoduls 14 nicht zwangsläufig synchronisiert sein müssen. Insbesondere müssen die Zyklen nicht funktionalsicher synchronisiert sein. Mit anderen Worten können die Zyklen regelmäßig synchronisiert sein, jedoch muss dies nicht zwangsläufig auf fehlersichere Art und Weise geschehen, um das Verfahren gemäß der vorliegenden Offenbarung auszuführen. Grundsätzlich sieht das beanspruchte Verfahren vor, dass zwischen den lokalen Zyklen 52 der einzelnen Steuerungsmodule 12, 14 ein zeitlicher Offset 54 ist.

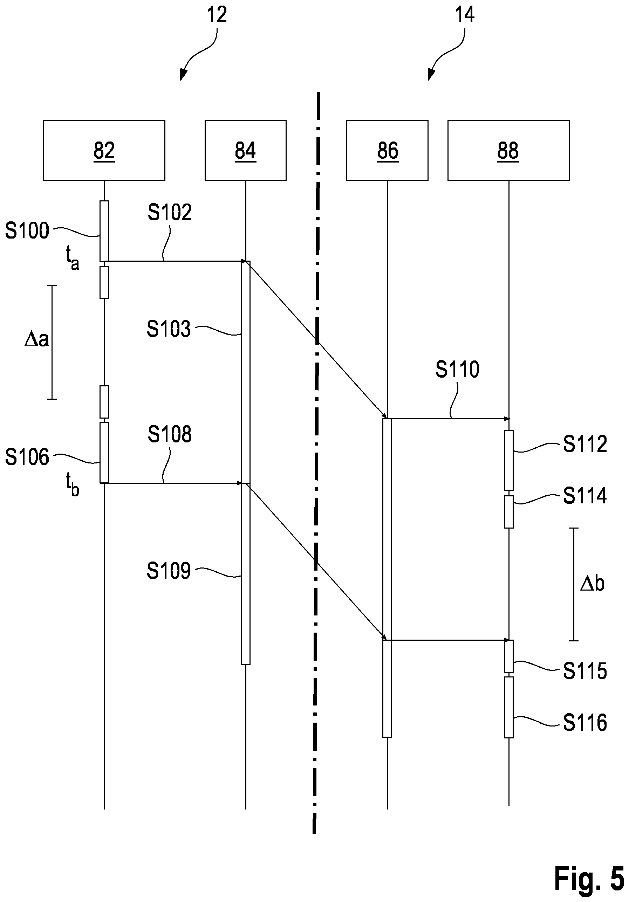

Das Steuerungsmodul 12 erstellt einen Rahmen für Prozessdaten und bereitet diesen für die Übertragung vor, wie hier mit der Bezugsziffer 56 angedeutet ist. Der Rahmen mit den Prozessdaten wird anschließend in einen Ausgangspuffer des von dem Kommunikationsbus 44 bereitgestellten Kommunikationskanal verschoben und damit in dessen Verantwortungsbereich übergeben (Zeitpunkt t₁). Es folgt die Übertragung über den Kommunikationsbus 44 zum zweiten Steuerungsmodul 14. Der Empfang der Daten ist hier mit der Bezugsziffer 58 angedeutet. Zeitpunkt t₂ markiert den Beginn der Verarbeitung der Prozessdaten durch das zweite Steuerungsmodul 14, d.h. das Auslesen der Prozessdaten aus dem empfangenen Rahmen und deren Auswertung. Das erste Steuerungsmodul 12 und das zweite Steuerungsmodul 14 sind zusammen eingerichtet, eine Mindestdauer Δ1 zwischen den beiden Zeitpunkten t₁ und t₂ zu gewährleisten. Dies kann beispielsweise dadurch erreicht werden, dass die Prozessdaten vom Steuerungsmodul 12 nicht nur einmal innerhalb des lokalen Zyklus vorbereitet und versendet werden, sondern zweimal. Ein solche Ausführung wird im Detail mit Bezug auf die Figuren 5-7 noch näher erläutert.

Das zweite Steuerungsmodul 14 erzeugt in Bezug auf die empfangenen Prozessdaten eine Rückantwort und legt diese zu einem Zeitpunkt t₃ in einen Ausgangspuffer des von dem Kommunikationsbus 44 bereitgestellten Kommunikationskanal. Zum Erstellen der Rückantwort gehört das Auslesen der Eingänge des zweiten Steuerungsmoduls 14 und das Schreiben der entsprechenden Zustände in den Rahmen für den Versand. Die Rückantwort wird nach dem Empfang durch das erste Steuerungsmodul 12 von diesem zum Zeitpunkt t₄ verarbeitet. Das erste Steuerungsmodul 12 und das zweite Steuerungsmodul 14 garantieren auch für die Rückantwort eine Mindestdauer Δ3 zwischen den beiden Zeitpunkten t₃ und t₄. Dies kann in analoger Weise erfolgen wie beim Senden der Prozessdaten, indem auch die Rückantwort innerhalb des lokalen Zyklus des zweiten Steuerungsmoduls 14 von diesem mehrfach (mindestens doppelt) vorbereitet und versendet wird.

Für eine Worst-Case-Analyse wird in Fig. 2 das Ereignis 60 (hier durch den Pfeil dargestellt) betrachtet. Das Ereignis 60 kann bspw. das Betätigen eines Not-Aus-Taster sein, wodurch sich der Zustand eines Eingangs des zweiten Steuerungsmoduls 14 ändert. Für die vorliegende Betrachtung ist das Ereignis 60 zeitlich so gewählt, dass eine Verarbeitung (hier mit der Bezugsziffer 62 angedeutet) des Ereignisses gerade nicht mehr für die Rückantwort zum Zeitpunkt t₃ berücksichtig werden kann, sondern erst in dem nachfolgenden Zyklus (Bezugsziffer 62') vollständig erfolgt. Diese Annahme ist zulässig, da grundsätzlich gefordert wird, dass ein Signal an den Eingängen für mindestens zwei lokale Zykluszeiten anliegen muss. Somit wird das Ereignis 60 im vorliegenden Fall erst im anschließenden Zyklus berücksichtigt und der entsprechende Zustand des Eingangs in der Rückantwort auf die Prozessdaten 58' hinterlegt und versendet. Dies Rückantwort wird anschließend ebenfalls an das erste Steuerungsmodul 12 übertragen und von diesem zum Zeitpunkt t'₄ verarbeitet.

Bei der Worst-Case-Analyse der FS-PAE Übertragungsdauer wird die Zeitdauer vom Auftreten des Ereignisses 60 bis zur (garantierten) Verarbeitung durch das erste Steuerungsmodul 12 betrachtet. Unter Berücksichtigung der redundanten Übertragung ist letzterer Zeitpunkt in der vorliegenden Darstellung der Zeitpunkt t'₄. Ohne zusätzliche zugesicherte zeitliche Eigenschaften der Übertragung oder Verarbeitung, ist für die Worst-Case-Betrachtung dabei der gesamte Umlauf 64 vom Zeitpunkt t₁ bis zum Zeitpunkt t'₄ heranzuziehen.

Für eine günstigere Worst-Case-Betrachtung sind die Steuerungsmodule 12, 14, wie zuvor beschrieben, gemeinsam oder einzeln dazu eingerichtet, bestimmte Mindestabstände (Mindestdauern) zwischen einzelnen Vorgängen zu garantieren. Im vorliegenden Fall sind das erste Steuerungsmodul 12 und das zweite Steuerungsmodul 14 derart eingerichtet, dass sie gemeinsam eine Mindestdauer Δ1 zwischen dem Zeitpunkt t₁ und dem Zeitpunkt t₂ sowie eine Mindestdauer Δ3 zwischen dem Zeitpunkt t₃ und dem Zeitpunkt t₄ (bzw. t'₃ und t'₄) gewährleisten können. Ferner ist das zweite Steuerungsmodul 14 hier alleine eingerichtet, eine Mindestdauer Δ2 zwischen dem Zeitpunkt t₂ und dem Zeitpunkt t₃ zu gewährleisten.

Indem die Mindestabstände wie beschrieben festgelegt werden, sind zusätzliche zeitliche Eigenschaften der Übertragung und Verarbeitung bekannt und garantiert, sodass diese bei der Worst-Case-Betrachtung berücksichtigt werden können. Im vorliegenden Fall bedeutet dies, dass ein Zeitraum 65 (Zeitpunkt t₁ bis Zeitpunkt t₃) bei der Betrachtung unberücksichtigt bleiben kann, da diese Zeitspanne bis zur Erstellung der Rückantwort mindestens benötigt wird, und daher festgelegt ist. Eine Möglichkeit diese Mindestabstände durch eine Mehrfachübertragung der Prozessdaten zu garantieren, wird in Bezug auf die Figuren 5-7 näher erläutert.

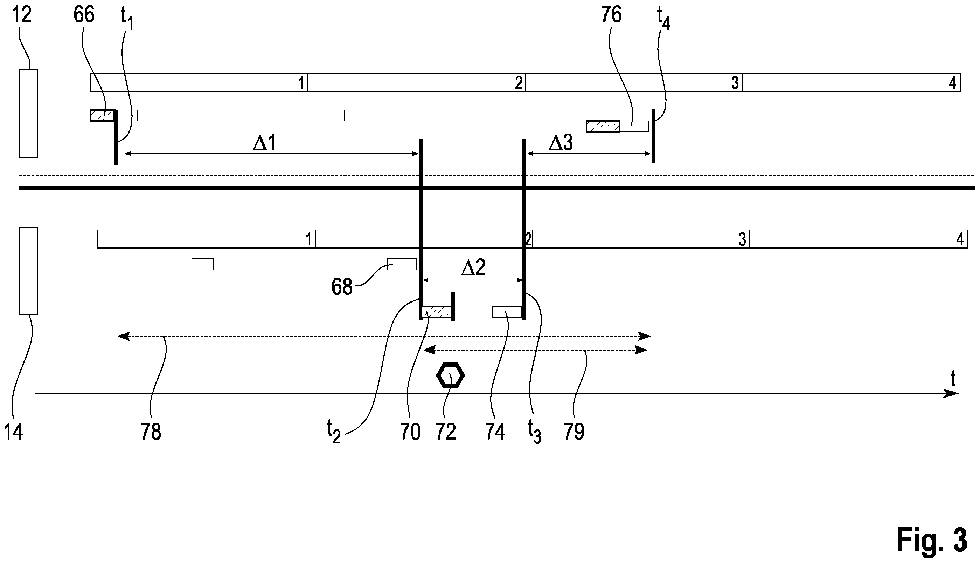

Zuvor wird jedoch anhand der Fig. 3 zunächst beispielhaft die Übertragung eines Prozessabbilds der Ausgänge PAA (FS-PAA) zwischen dem Kopfmodul (erstes Steuerungsmodul 12) und dem Ein- und Ausgabemodul (zweites Steuerungsmodul 14) gezeigt. Wie bei Fig. 2 ist auch im Diagramm gemäß Fig. 3 der zeitliche Verlauf t in Längsrichtung aufgetragen. Analog zu Fig. 2 erstellt das Steuerungsmodul 12 einen Rahmen für Prozessdaten und bereitet diesen für die Übertragung vor, wie hier mit der Bezugsziffer 66 angedeutet ist. Der Rahmen mit den Prozessdaten wird anschließend in einen Ausgangspuffer des von dem Kommunikationsbus 44 bereitgestellten Kommunikationskanal verschoben und damit in dessen Verantwortungsbereich übergeben (Zeitpunkt t₁).

Nach dem Empfang 68 der Prozessdaten durch das zweite Steuerungsmodul 14 beginnt diese zum zweiten Zeitpunkt t₂ mit der Verarbeitung der Prozessdaten. Die hieraus resultierende Ausgabe an die Ausgänge ist mit der Bezugsziffer 70 angedeutet. Nach der Ausgabe 70 stellt sich der gewünschte Zustand 72, beispielsweise ein Stopp der Maschine, ein. Zum dritten Zeitpunkt t₃ erstellt das zweite Steuerungsmodul 14 eine entsprechende Rückantwort und bereitet diese zur Übertragung 74 vor. Nach dem Empfang 76 der Rückantwort durch das erste Steuerungsmodul 12, wird die Rückantwort zum vierten Zeitpunkt t₄ ausgewertet.

Bei der Worst-Case-Analyse der FS-PAA Übertragungsdauer ist die Zeitdauer vom Senden der Prozessdaten bis zum Empfang der Rückantwort maßgeblich, sofern keine weiteren zeitlichen Eigenschaften zugesichert sind. Mit anderen Worten ist hier zunächst der gesamte Umlauf 78 bei der Betrachtung maßgeblich.

Für eine günstigere Worst-Case-Betrachtung werden auch hier vorteilhaft Mindestabstände zwischen einzelnen Vorgängen garantiert. Dabei entspricht die zweite Mindestdauer Δ2 zwischen dem zweiten Zeitpunkt t₂ und dem dritten Zeitpunkt t₃ der zuvor mit Bezug auf Fig. 2 angedeuteten zweiten Mindestdauer Δ2. Ferner kann eine dritte Mindestdauer Δ3 durch das Zusammenwirken des ersten Steuerungsmoduls 12 und des zweiten Steuerungsmoduls 14 garantiert werden. Die dritte Mindestdauer Δ3 betrifft die Zeitspanne zwischen dem dritten Zeitpunkt t₃ und dem vierten Zeitpunkt t₄.

Wie zuvor, kann durch das Garantieren dieser Mindestabstände eine günstigere Worst-Case-Betrachtung hinsichtlich der Übertragung des Prozessabbilds der Ausgänge erreicht werden. Durch diese zugesicherten zeitlichen Eigenschaften kann eine Zeitspanne 79 ausgehend vom zweiten Zeitpunkt t₂ bis zum vierten Zeitpunkt t₄ bei der Betrachtung unberücksichtigt bleiben.

Nachdem vorstehend die vorteilhaften Wirkungen der Mindestabstände auf die Worst-Case-Betrachtungen für die Übertragungsdauer von PAE und PAA aufgezeigt worden sind, wird im Folgenden erläutert, wie die Steuerungsmodule eingerichtet sein können, um die besagten Mindestabstände zu gewährleisten.

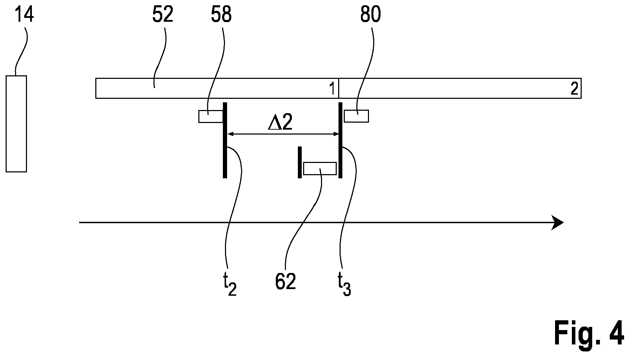

Wie vorstehend gezeigt, sind drei Mindestdauern Δ1 - Δ3 relevant. Die Mindestdauer Δ2 kann durch ein einzelnes Steuerungsmodul gewährleistet werden. Die Mindestdauer Δ1 und die Mindestdauer Δ3 hingegen können nur durch das Zusammenwirken zweier Module zugesichert werden. Letzteres kann sich eine redundante (mehrfach) Übertragung der Prozessdaten zunutze machen, um die Mindestabstände zu garantieren. Im Folgenden wird mit Bezug auf die Fig. 4 zunächst auf die Mindestdauer Δ2 eingegangen, die von einem einzelnen Steuerungsmodul gewährleistet werden kann.

Fig. 4 ist einen Ausschnitt aus den Figuren 2 oder 3, der nur das zweite Steuerungsmodul 14 zeigt. Gleiche Bezugszeichen bezeichnen die gleichen Teile wie in Bezug auf Fig. 2 und Fig. 3.

Der Ausschnitt zeigt zwei lokale Zyklen 52 des zweiten Steuerungsmoduls 14. Wie zuvor beschrieben, verarbeitet das zweite Steuerungsmodul 14, nachdem es Prozessdaten eines anderen Steuerungsmoduls empfangen hat, diese ab dem Zeitpunkt t₂. Gleichzeitig startet das Steuerungsmodul 14 einen Zeitgeber für eine Zeitüberwachung. Mittels der Zeitüberwachung wird ein Zeitraum festgelegt, innerhalb dessen das Steuerungsmodul 14 eine Übertragung der Prozessdaten (Rückantwort) unterbindet. Erst nach Ablauf des festgelegten Zeitraums ist das Steuerungsmodul 14 befähigt, eine Rückantwort an das andere Steuerungsmodul zu erstellen und zu senden. Der Zeitraum, in dem das zweite Steuerungsmodul 14 am Senden der Rückantwort gehindert ist, entspricht der zweiten Mindestdauer Δ2.

Die Zeitüberwachung kann als Timer mit festgelegter Dauer ausgelegt sein. Ein solcher Timer lässt sich auf einfache Weise durch den im Steuerungsmodul vorhandenen Verarbeitungsteil 38 realisieren. Dabei ermöglicht die redundante Auslegung des Verarbeitungsteil 38 auch eine fehlersichere Einrichtung des Timers. Beispielsweise kann jede Verarbeitungseinheit 40 des zweiten Steuerungsmoduls jeweils einen Timer ausführen, um die Mindestdauer fehlersicher zu gewährleisten. Timer sind üblicherweise bei gängigen Mikrocontroller bereits integriert oder können auf einfache Weise in Software nachgebildet werden. Für die Implementierung der Zeitüberwachung ist somit keine zusätzliche Hardware notwendig, sodass diese auch bei vorhandenen Steuerungsmodulen nachgerüstet werden kann.

Mit Bezug auf die Figuren 5 bis 7 wird im Folgenden beschrieben, wie zwei Steuerungsmodule im Zusammenspiel miteinander Mindestabstände zwischen einzelnen Vorgängen gewährleisten können. Eine Möglichkeit besteht darin, die Prozessdaten mehrfach innerhalb der Zykluszeit zu versenden, sodass immer eine erste Instanz und mindestens eine zweite Instanz der Prozessdaten in einem einzelnen Zyklus übertragen werden.

Um diese Instanzen kenntlich, unterscheidbar und sortierbar zu machen, können die Steuerungsmodule eingerichtet sein, die redundanten Instanzen, d. h. die redundanten Pakete eines bestimmten Prozess-Daten-Objekts (PDO), mit fortlaufenden Instanz-Nummern zu versehen. Die Instanz-Nummern dienen dazu, die redundanten Instanzen unterscheidbar zu machen und können folglich eine Ergänzung zu einer bereits vorhandenen laufenden Nummerierung der Prozessdaten sein. Es versteht sich, dass zur Erreichung dieser Unterscheidbarkeit auch andere Maßnahmen ergriffen werden können.

Mithilfe der Unterscheidbarkeit der einzelnen Instanzen und unter Ausnutzung der redundanten Übertragung lässt sich, wie im Folgenden noch näher erläutert, eine Mindestdauer zwischen dem Erstellen der Prozessdaten auf einem Steuerungsmodul und deren Verarbeitung auf einem anderen Steuerungsmodul garantieren.

Fig. 5 zeigt in einem Sequenzdiagramm die Übertragung der redundanten Prozessdaten von einem ersten Steuerungsmodul 12 zu einem zweiten Steuerungsmodul 14. Das Steuerungsmodul 12 beinhaltet einen fehlersicheren Prozessabbilderzeuger 82 sowie einen Sendepuffer 84. Das Steuerungsmodul 14 weist einen Empfangspuffer 86 sowie einen fehlersicheren Prozessabbildverbraucher 88 auf. Der Prozessabbilderzeuger 82 erzeugt ein Prozessabbild zur Übertragung, während der Prozessabbildverbraucher 88 ein empfangenes Prozessabbild auswertet. Der Prozessabbilderzeuger 82 und der Prozessabbildverbraucher 88 sind fehlersichere Einrichtungen. Hingegen kann es sich bei dem Sendepuffer 84 und dem Empfangspuffer 86 um nicht-fehlersichere Einrichtungen (auch als Standardeinrichtungen bezeichnet) eines Kommunikationsbusses handeln.

Es versteht sich, dass das Steuerungsmodul 12 analog zum Steuerungsmodul 14 einen Empfangspuffer sowie ein Prozessabbildverbraucher aufweisen kann. Ebenso kann das Steuerungsmodul 14 einen Sendepuffer sowie einen Prozessabbilderzeuger aufweisen. Auf diese Weise lässt sich eine Umlaufkommunikation zwischen den beiden Modulen realisieren. Zur Vereinfachung wurde hier jedoch auf eine Darstellung dieser Komponenten verzichtet.

Fig. 5 zeigt die redundante Übertragung einer ersten Instanz und einer zweiten Instanz von Prozessdaten. Genauer gesagt, zeigt Fig. 5 die Übertragung eines ersten Prozessdatenobjekts der ersten Instanz (FS-PDO Instanz 1) gefolgt von einer Übertragung eines zweiten Prozessdatenobjekts zweiter Instanz (FS-PDO Instanz 2). Das erste Prozessdatenobjekt und das zweite Prozessdatenobjekt haben hierbei den gleichen steuerungsrelevanten Inhalt, sind jedoch beispielsweise durch die oben beschriebene Instanz-Nummerierung unterscheidbar gemacht.

Im Folgenden wird erläutert, wie bei einer solchen Übertragung ein minimaler zeitlicher Abstand eingehalten werden kann (vgl. Fig. 2 und 3: Mindestdauer Δ1 und Mindestdauer Δ3). Hierbei zeigt Fig. 5 den Fall, in dem alle Prozessdatenobjekt beim Empfänger (zweites Steuerungsmodul 14) ankommen und keines der redundanten Prozessdatenobjekte verloren geht.

In einem Schritt S100 erstellt der fehlersichere Prozessabbilderzeuger 82 ein Prozessdatenobjekt erster Instanz und legt dieses im Schritt S102 zu einem Zeitpunkt tₐ in den Sendepuffer ab. Anschließend liegt das Prozessdatenobjekt im Sendepuffer 84 (S103) und kann über den Kommunikationsbus 44 verschickt werden. Der fehlersichere Prozessabbilderzeuger 82 kann ab diesem Zeitpunkt keinen Einfluss mehr darauf nehmen, wann und wie das Prozessdatenobjekt tatsächlich über den Kommunikationsbus 44 versendet wird. Dementsprechend startet das erste Steuerungsmodul 12 nach Ablegen des Prozessdatenobjekts der ersten Instanz (FS-PDO Instanz 1) in dem Sendepuffer 84 eine Zeitüberwachung, um einen minimalen Abstand zur Erstellung des zweiten Prozessdatenobjekts (FS-PDO Instanz 2) sicherzustellen. Die Zeitüberwachung kann, ähnlich wie zuvor beschrieben, durch einen Timer realisiert sein, der auf eine definierte Zeitspanne (Timer-Laufzeit) eingestellt ist. Zudem ist das erste Steuerungsmodul 12 eingerichtet kein weiteres Prozessdatenobjekt zu erstellen bzw. ein solches in den Sendepuffer zu verschieben, solange die definierte Zeitspanne noch nicht abgelaufen ist. Somit wird das Prozessdatenobjekt zweiter Instanz erst nach Ablauf des Timers, d. h., wenn keine Zeitunterschreitung festgestellt worden ist, in den Sendepuffer 84 gelegt. Vorzugsweise wird das Prozessdatenobjekt zweiter Instanz auch erst nach Ablauf des Timers erstellt (S106).

Das Prozessdatenobjekt zweiter Instanz wird somit unter Einhaltung eines Minimalabstands im Schritt S108 in den Sendepuffer 84 gelegt und ist anschließend zum Versand bereit (S109). Das erste Steuerungsmodul 12 garantiert somit, dass zwischen dem Erstellen des Prozessdatenobjekts erster Instanz und dem Erstellen des Prozessdatenobjekts zweiter Instanz ein Mindestabstand Δa eingehalten wird.

Wenn keines der Prozessdatenobjekte bei der Übertragung verloren geht, empfängt das zweite Steuerungsmodul 14 zunächst das Prozessdatenobjekt erster Instanz, welches im Empfangspuffer 86 abgelegt ist und welches im Schritt S110 von dem Prozessabbildverbraucher 88 ausgelesen wird. Anschließend erfolgt die Auswertung des Prozessdatenobjekts im Schritt S112.

Das zweite Steuerungsmodul 14 startet sodann eine Zeitüberwachung, um den minimalen Abstand zur Verarbeitung und Auswertung eines Prozessdatenobjekts zweiter Instanz sicherzustellen (S114). Die Zeitüberwachung kann analog zur Zeitüberwachung des ersten Steuerungsmoduls eingerichtet sein, wobei während der Timer-Laufzeit nicht das Senden eines Prozessdatenobjekts verhindert wird, sondern dessen Verarbeitung und Auswertung. Dies kann erfolgen, indem das zweite Steuerungsmodul 14 eingerichtet ist, ein im Empfangspuffer 86 liegendes Prozessdatenobjekt zweiter Instanz auszulesen, eine Verarbeitung und Auswertung dies Objekts aber nur dann auszuführen, wenn keine Zeitunterschreitung festgestellt worden ist und somit ein Mindestabstand Δb sichergestellt werden kann. Mit anderen Worten: Eine Auswertung des Prozessdatenobjekts der zweiten Instanz erfolgt im Schritt S116 bedingt und zwar in Abhängigkeit davon, ob die Zeitüberwachung beendet (S115) worden ist.

Indem die beiden Steuerungsmodule 12, 14 jeweils die Mindestabstände Δa und Δb garantieren, ist es möglich, dass der Prozessabbilderzeuger 82 im ersten Steuerungsmodul 12 und der Prozessabbildverbraucher 88 im zweiten Steuerungsmodul 14 gemeinsam sicherstellen, dass zwischen dem Erstellen (S100) und dem Verarbeiten (S116) der Prozessdaten ein minimaler zeitlicher Abstand vorhanden ist. Dieser minimale zeitliche Abstand entspricht den Mindestdauern Δ1 und Δ3, wie sie im Zusammenhang mit der Fig. 2 und 3 beschrieben worden sind. Unter Ausnutzung der redundanten Übertragung kann somit durch das Sicherstellen definierter Zeitspannen zwischen Vorgängen innerhalb der einzelnen Steuerungsmodule die benötigte Mindestdauer (Mindestdauern Δ1 und Δ3) auf einfache Weise gewährleistet werden.

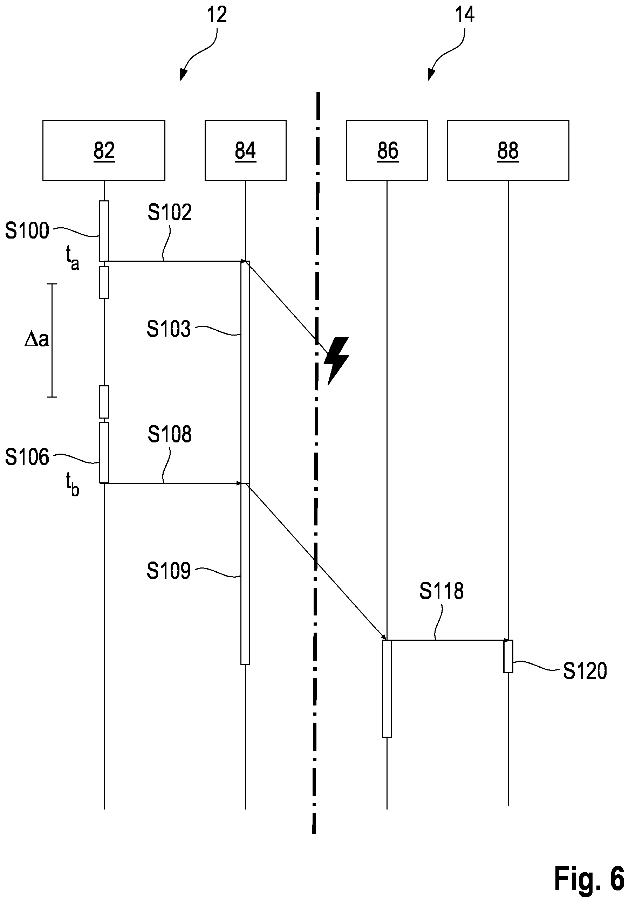

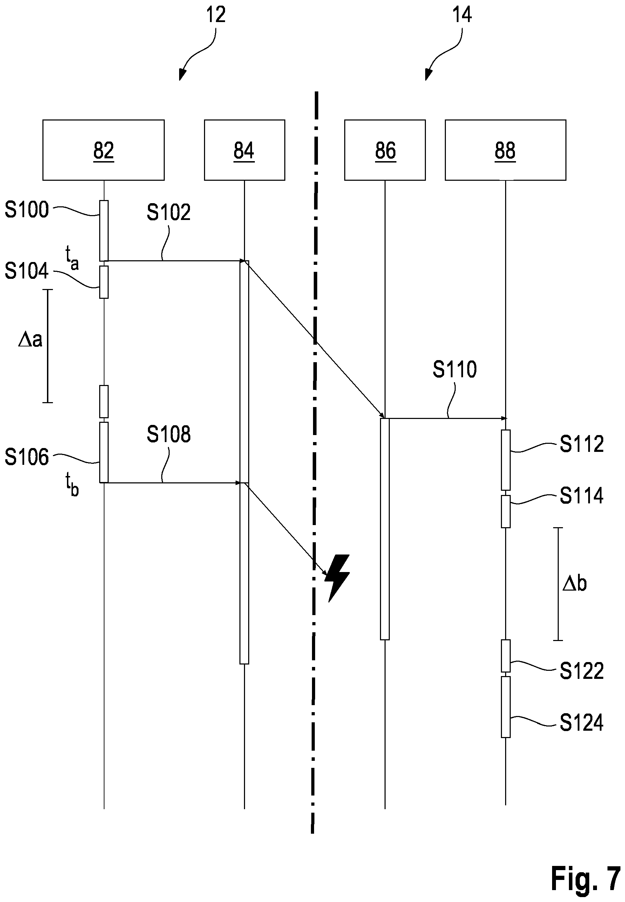

Diese Mindestdauern können auch dann gewährleistet werden, wenn eines der beiden Prozessdatenobjekte verloren gehen sollte. In Fig. 6 wird nachfolgend der Fall skizziert, dass das Prozessdatenobjekt der ersten Instanz bei der Übertragung verloren geht. Fig. 7 zeigt anschließend den anderen Fall, bei dem das Prozessdatenobjekt der zweiten Instanz sein Ziel nicht erreicht.

In den Figuren 6 und 7 sind die Vorgänge im ersten Steuerungsmodul 12 im Vergleich zur Fig. 5 unverändert und das erste Steuerungsmodul 12 überträgt die redundanten Prozessdaten gemäß der zuvor genannten Schritte S100 bis S108. Eine erneute Beschreibung dieser Schritte wird dementsprechend weggelassen.

Im Unterschied zur Fig. 5 geht in dem Fall gemäß Fig. 6 die Übertragung des Prozessdatenobjekts der ersten Instanz (FS-PDO Instanz 1) verloren. Das Prozessdatenobjekt der ersten Instanz erreicht somit nicht den Empfangspuffer 86 des zweiten Steuerungsmoduls 14 bzw. der Prozessabbildverbraucher 88 kann das Prozessdatenobjekt der ersten Instanz nicht aus dem Empfangspuffer 86 lesen. In diesem Fall wird das Prozessdatenobjekt der ersten Instanz nicht von dem Prozessabbildverbraucher 88 verarbeitet und ausgewertet. Ebenso wird keine Zeitüberwachung gestartet. Indes empfängt das zweite Steuerungsmodul 14 das Prozessdatenobjekt der zweiten Instanz. Dieses wird vom Prozessabbildverbraucher 88 anschließend im Schritt S 118 ausgelesen und direkt im Schritt S120 verarbeitet. Da der Prozessabbildverbraucher 88 erkennt, dass es sich um ein Prozessdatenobjekt der zweiten Instanz handelt, wird keine Zeitüberwachung gestartet.

Gemäß dieser Abarbeitung kann auch in dem Fall, in dem das Prozessdatenobjekt der ersten Instanz verloren geht, der minimale zeitliche Abstand zwischen dem Erstellen und Verarbeiten gewährleistet werden.

Gleiches ergibt sich für den Fall, wenn das Prozessdatenobjekt der zweiten Instanz verloren gehen sollte. Dieser Fall ist in Fig. 7 skizziert. Auch hier sind die Schritte, die das erste Steuerungsmodul 12 ausführt, zunächst identisch zu denen in Fig. 5.

Das zweite Steuerungsmodul 14 empfängt somit das Prozessdatenobjekt der ersten Instanz und führt die Schritte S110 bis S114 aus, wie sie bereits im Zusammenhang mit der Fig. 5 beschrieben worden sind. Demnach startet der Prozessabbildverbraucher 88 nach der Auswertung des Prozessdatenobjekts der ersten Instanz (S112) eine Zeitüberwachung (S114), empfängt jedoch dann nach Ablauf der festgelegten Zeitspanne kein weiteres Prozessdatenobjekt (S122). Somit wertet der Prozessabbildverbraucher 88 nach Ablauf der Zeitüberwachung erneut das Prozessdatenobjekt der ersten Instanz aus, um die Prozessdatenauswertung abzuschließen (S124). Da die erneute Auswertung des Prozessdatenobjekts der ersten Instanz ebenfalls um den minimalen zeitlichen Abstand Δb verzögert erfolgt, wird erneut bei der Betrachtung der Kommunikation als Ganzes der Mindestabstand zwischen dem Erstellen der Prozessdaten (S100) und der abschließenden Auswertung (S124) der Prozessdaten gewährleistet.

Es versteht sich, dass die vorstehend genannten Möglichkeiten Mindestabstände in Übertragung einzubauen nur beispielhaft zu verstehen sind und andere Varianten hierfür denkbar sind. Der Gegenstand der vorliegenden Offenbarung ist somit durch vorliegende Beschreibung nicht beschränkt. Vielmehr wird der Gegenstand der Erfindung ausschließlich durch die nachfolgenden Patentansprüche definiert.

## Patentansprüche

1. Steuervorrichtung (10) zum Steuern einer automatisierten Anlage, aufweisend:
ein erstes Steuerungsmodul (12);
ein zweites Steuerungsmodul (14); und
einen Kommunikationskanal, über den das erste Steuerungsmodul (12) und das zweite Steuerungsmodul (14) Prozessdaten der automatisierten Anlage austauschen;
wobei das erste Steuerungsmodul (12) dazu eingerichtet ist, zu einem ersten Zeitpunkt t₁ Prozessdaten zu erstellen, diese an das zweite Steuerungsmodul (14) über den Kommunikationskanal zu senden, eine Rückantwort auf die Prozessdaten von dem zweiten Steuerungsmodul (14) zu empfangen und diese zu einem vierten Zeitpunkt t₄ zu verarbeiten,
wobei das zweite Steuerungsmodul (14) dazu eingerichtet ist, die Prozessdaten von dem ersten Steuerungsmodul (12) zu empfangen, diese zu einem zweiten Zeitpunkt t₂ zu verarbeiten, zu einem dritten Zeitpunkt t₃ die Rückantwort zu erstellen und die Rückantwort an das erste Steuerungsmodul (12) zu senden,
wobei die Zeitpunkte t₁, t₂, t₃, und t₄ in chronologischer Reihenfolge sind,
**dadurch gekennzeichnet, dass**
das erste Steuerungsmodul (12) und das zweite Steuerungsmodul (14) dazu eingerichtet sind, bei einer Kommunikation untereinander bestimmte Mindestdauern zwischen ausgewählten Ereignissen zu gewährleisten, um einen vorbestimmten minimalen zeitlichen Abstand zwischen zwei Ereignissen zu garantieren, wobei das erste Steuerungsmodul (12) und das zweite Steuerungsmodul (14) dazu eingerichtet sind, zusammen eine erste bestimmte Mindestdauer Δ1 zwischen dem ersten Zeitpunkt t₁ und dem zweiten Zeitpunkt t₂ und/oder eine dritte bestimmte Mindestdauer Δ3 zwischen dem dritten Zeitpunkt t₃ und dem vierten Zeitpunkt t₄ zu garantieren, und/oder wobei das zweite Steuerungsmodul (14) dazu eingerichtet ist, eine zweite bestimmte Mindestdauer Δ2 zwischen dem zweiten Zeitpunkt t₂ und dem dritten Zeitpunkt t₃ zu garantieren.

2. Steuervorrichtung nach Anspruch 1, wobei das erste Steuerungsmodul (12) und das zweite Steuerungsmodul (14), dazu eingerichtet sind, die Prozessdaten redundant zu übertragen und dabei zeitliche Eigenschaften zuzusichern, um die erste bestimmte Mindestdauer Δ1 und/oder die dritte bestimmte Mindestdauer Δ3 zu garantieren.

3. Steuervorrichtung nach Anspruch 2, wobei das erste Steuerungsmodul (12) dazu eingerichtet ist, eine erste Instanz der Prozessdaten zu einem Zeitpunkt tₐ in einen Sendepuffer (84) des Kommunikationskanals zu verschieben und eine zweite Instanz der Prozessdaten zu einem Zeitpunkt t_{b} in den Sendepuffer (84) des Kommunikationskanals zu verschieben, um die Prozessdaten redundant zu übertragen, sowie eine erste Zeitüberwachung zur Bestimmung eines ersten zeitlichen Abstands zwischen den Zeitpunkten tₐ und t_{b} zu starten und die zweite Instanz der Prozessdaten nur dann in den Sendepuffer (84) zu verschieben, wenn der erste zeitliche Abstand einen bestimmten Mindestwert überschreitet.

4. Steuervorrichtung nach einem der Ansprüche 1 bis 3, wobei das zweite Steuerungsmodul (14) dazu eingerichtet ist, eine erste Instanz der Rückantwort zu einem Zeitpunkt tₐ in einen Sendepuffer (84) des Kommunikationskanals zu verschieben und eine zweite Instanz der Rückantwort zu einem Zeitpunkt t_{b} in den Sendepuffer (84) des Kommunikationskanals zu verschieben, um die Rückantwort auf die Prozessdaten redundant zu übertragen, sowie eine zweite Zeitüberwachung zur Bestimmung eines zweiten zeitlichen Abstands zwischen den Zeitpunkten tₐ und t_{b} zu starten und die zweite Instanz der Rückantwort nur dann in den Sendepuffer (84) zu verschieben, wenn der zweite zeitliche Abstand einen bestimmten Mindestwert überschreitet.

5. Steuervorrichtung nach einem der Ansprüche 2 bis 4, wobei das zweite Steuerungsmodul (14) dazu eingerichtet ist, eine dritte Zeitüberwachung zur Bestimmung eines dritten zeitlichen Abstands zwischen einem Empfang einer ersten Instanz der Prozessdaten und einem Empfang einer zweiten Instanz der Prozessdaten nur dann zu starten, wenn das zweite Steuerungsmodul (14) eine erste Instanz der Prozessdaten empfängt, um die zeitlichen Eigenschaften zuzusichern.

6. Steuervorrichtung nach einem der Ansprüche 2 bis 5, wobei das erste Steuerungsmodul (12) dazu eingerichtet ist, eine vierte Zeitüberwachung zur Bestimmung eines vierten zeitlichen Abstands zwischen einem Empfang einer ersten Instanz der Rückantwort und einem Empfang einer zweiten Instanz der Rückantwort nur dann zu starten, wenn das erste Steuerungsmodul (12) eine erste Instanz der Rückantwort empfängt, um die zeitlichen Eigenschaften zuzusichern.

7. Steuervorrichtung nach einem der Ansprüche 2 bis 6, wobei die erste Instanz der Prozessdaten und die zweite Instanz der Prozessdaten redundante Datentelegramme der Prozessdaten sind und das erste Steuerungsmodul (12) dazu eingerichtet die, die erste Instanz der Prozessdaten und die zweite Instanz der Prozess-daten mit fortlaufenden Instanz-Nummern zu versehen und/oder wobei die erste Instanz der Rückantwort und die zweite Instanz der Rückantwort redundante Datentelegramme der Rückantwort sind und das zweite Steuerungsmodul (14) dazu eingerichtet ist, die erste Instanz der Rückantwort und die zweite Instanz der Rückantwort mit fortlaufenden Instanz-Nummern zu versehen.

8. Steuervorrichtung nach einem der Ansprüche 1 bis 7, wobei das zweite Steuerungsmodul (14) dazu eingerichtet ist, zu dem zweiten Zeitpunkt t₂ eine fünfte Zeitüberwachung zur Bestimmung eines fünften zeitlichen Abstands zu dem dritten Zeitpunkt t₃ zu starten, und wobei das zweite Steuerungsmodul (14) dazu eingerichtet ist, die Rückantwort erst zu dem dritten Zeitpunkt t₃ nach Ablauf der zweiten bestimmten Mindestdauer Δ2 zu erstellen.

9. Steuervorrichtung nach einem der Ansprüche 1 bis 8, wobei das erste Steuerungsmodul (12) dazu eingerichtet ist, die Prozessdaten zyklisch zu senden und zu empfangen, als eine Umlaufzeit eine Anzahl von Zyklen zwischen dem ersten Zeitpunkt t₁ und dem vierten Zeitpunkt t₄ zu überwachen und eine sicherheitsgerichtete Aktion auszulösen, falls die Umlaufzeit einen bestimmten Wert überschreitet.

10. Steuervorrichtung nach einem der Ansprüche 1 bis 9, wobei das erste Steuerungsmodul (12) dazu eingerichtet ist, die Prozessdaten gemäß einem ersten lokalen Zyklus zu verarbeiten, wobei das zweite Steuerungsmodul (14) dazu eingerichtet ist, die Prozessdaten gemäß einem zweiten lokalen Zyklus zu verarbeiten, wobei der erste lokale Zyklus und der zweite lokale Zyklus die gleiche Periodendauer haben, jedoch nicht zwangsläufig synchronisiert sein müssen, und wobei die erste bestimmte Mindestdauer Δ1, die zweite bestimmte Mindestdauer Δ2 und die dritte bestimmte Mindestdauer Δ3 jeweils kürzer als die Periodendauer sind

11. Steuervorrichtung nach Anspruch 10, wobei das erste Steuerungsmodul (12) dazu eingerichtet ist, innerhalb des ersten lokalen Zyklus eine erste Instanz und mindestens eine zweite Instanz der Prozessdaten an das zweite Steuerungsmodul (14) zu senden.

12. Steuervorrichtung nach Anspruch 10 oder 11, wobei das zweite Steuerungsmodul (14) dazu eingerichtet ist, innerhalb des zweiten lokalen Zyklus eine erste Instanz und mindestens eine zweite Instanz der Rückantwort der Prozessdaten an das erste Steuerungsmodul (12) zu senden.

13. Steuervorrichtung nach einem der Ansprüche 1 bis 12, wobei das erste Steuerungsmodul (12) und das zweite Steuerungsmodul (14) je einen fehlersicher implementierten Verarbeitungsteil (38) aufweisen, der dazu eingerichtet ist, eine fehlersichere Ausführung eines Anwenderprogramms und/oder eine fehlersichere Ein-und Ausgabe der Prozessdaten zu ermöglichen.

14. Steuervorrichtung nach Anspruch 13, wobei der fehlersicher implementierte Verarbeitungsteil (38) eingerichtet ist, eine fehlersichere Kommunikation über den Kommunikationskanal unabhängig von einer Ausgestaltung des Kommunikationskanals zu gewährleisten und/oder eine fehlersichere Zeitüberwachung auf dem ersten Steuerungsmodul (12) und dem zweiten Steuerungsmodul (14) zu ermöglichen.

15. Verfahren zum Steuern einer automatisierten Anlage, aufweisend:
ein Kommunikationskanal verbindet ein erstes Steuerungsmodul (12) und ein zweites Steuerungsmodul (14) zum Austausch von Prozessdaten der automatisierten Anlage;
das erste Steuerungsmodul (12) erstellt zu einem ersten Zeitpunkt t₁ Prozessdaten, sendet diese an das zweite Steuerungsmodul (14) über den Kommunikationskanal, empfängt eine Rückantwort auf die Prozessdaten von dem zweiten Steuerungsmodul (14) und verarbeitet diese zu einem vierten Zeitpunkt t₄;
das zweite Steuerungsmodul (14) empfängt die Prozessdaten von dem ersten Steuerungsmodul (12), verarbeitet diese zu einem zweiten Zeitpunkt t₂, erstellt die Rückantwort zu einem dritten Zeitpunkt t₃ und sendet diese an das erste Steuerungsmodul (12);
die Zeitpunkte t₁, t₂, t₃, und t₄ erfolgen in chronologischer Reihenfolge;
das erste Steuerungsmodul und das zweite Steuerungsmodul gewährleisten bei einer Kommunikation untereinander bestimmte Mindestdauern zwischen ausgewählten Ereignissen, um einen vorbestimmten minimalen zeitlichen Abstand zwischen zwei Ereignissen zu garantieren,
wobei das erste Steuerungsmodul (12) und das zweite Steuerungsmodul (14) zusammen eine erste bestimmte Mindestdauer Δ1 zwischen dem ersten Zeitpunkt t₁ und dem zweiten Zeitpunkt t₂ und/oder eine dritte bestimmte Mindestdauer Δ3 zwischen dem dritten Zeitpunkt t₃ und dem vierten Zeitpunkt t₄ garantieren, und/oder wobei das zweite Steuerungsmodul (14) eine zweite bestimmte Mindestdauer Δ2 zwischen dem zweiten Zeitpunkt t₂ und dem dritten Zeitpunkt t₃ garantiert.

## Claims

1. A control device (10) for controlling an automated system, the control device comprising:
a first control module (12);
a second control module (14); and
a communication channel via which the first control module (12) and the second control module (14) exchange process data of the automated system;
wherein the first control module (12) is configured to generate process data at a first time t₁, send the process data to the second control module (14) via the communication channel, receive a response to the process data from the second control module (14), and process the process data at a fourth time t₄,
wherein the second control module (14) is configured to receive the process data from the first control module (12), process the process data at a second time t₂, generate the response at a third time t₃, and send the response to the first control module (12),
wherein the times t₁, t₂, t₃, and t₄ are in chronological order,
wherein the first control module (12) and the second control module (14) are configured to ensure that, when communicating with each other, certain minimum durations between selected events are guaranteed in order to ensure a predetermined minimum time interval between two events,
wherein the first control module (12) and the second control module (14) are configured to guarantee jointly a first defined minimum duration Δ1 between the first time t₁ and the second time t₂, and/or a third defined minimum duration Δ3 between the third time t₃ and the fourth time t₄, and/or
wherein the second control module (14) is configured to guarantee a second defined minimum duration Δ2 between the second time t₂ and the third time t₃.

2. The control device of claim 1, wherein the first control module (12) and the second control module (14) are configured to redundantly transmit the process data and to ensure specific time characteristics in order to guarantee the first defined minimum duration Δ1 and/or the third defined minimum duration Δ3.

3. The control device according to claim 2, wherein the first control module (12) is configured to shift a first instance of the process data into a transmit buffer (84) of the communication channel at a first point of time tₐ and shift a second instance of the process data into the transmit buffer (84) of the communication channel at a second point of time t_{b} in order to transmit the process data redundantly, start a first time monitoring for determine a first time interval between the points of time tₐ and t_{b}, and shift the second instance of the process data into the transmit buffer (84) only if the determined first time interval exceeds a defined minimum value.

4. The control device according to any one of claims 1 to 3, wherein the second control module (14) is configured to shift a first instance of the response into a transmit buffer (84) of the communication channel at a point of time tₐ and shift a second instance of the response into the transmit buffer (84) of the communication channel at a point of time t_{b} in order to transmit the response to the process data redundantly, start a second time monitoring for determining a second time interval between the points of time tₐ and t_{b}, and shift the second instance of the response into the transmit buffer (84) only if the determined second time interval exceeds a defined minimum value.

5. The control device according to any one of claims 2 to 4, wherein the second control module (14) is configured to start a third time monitoring for determining a third time interval between reception of a first instance of the process data and reception of a second instance of the process data only when the second control module (14) receives a first instance of the process data in order to ensure the specific time characteristics.

6. The control device according to any one of claims 2 to 5, wherein the first control module (12) is configured to start a fourth time monitor for determining a fourth time interval between reception of a first instance of the response and reception of a second instance of the response only when the first control module (12) receives a first instance of the response in order to ensure the time characteristics.

7. The control device according to any one of claims 2 to 6, wherein the first instance of the process data and the second instance of the process data are redundant data telegrams of the process data, and the first control module (12) is configured to provide the first instance of the process data and the second instance of the process data with consecutive instance numbers, and/or wherein the first instance of the response and the second instance of the response are redundant data telegrams of the response and the second control module (12) is configured to provide the first instance of the response and the second instance of the response with consecutive instance numbers.

8. The control device according to any one of claims 1 to 7, wherein the second control module (14) is configured to start a fifth time monitoring at the second time t₂ for determining a fifth time interval to the third time t₃, and wherein the second control module (14) is configured generate the response at the third time t₃ only after the second minimum duration Δ2 has elapsed.

9. The control device according to any one of claims 1 to 8, wherein the first control module (12) is configured to send and receive the process data cyclically, monitor a number of cycles between the first time t₁ and the fourth time t₄ as a round-trip time, and trigger a safety-related action if the round-trip time exceeds a defined value.

10. The control device according to any one of claims 1 to 9, wherein the first control module (12) is configured to process the process data according to a first local cycle, wherein the second control module (14) is configured to process the process data according to a second local cycle, wherein the first local cycle and the second local cycle have the same period, but do not necessarily have to be synchronized, and wherein the first minimum duration Δ1, the second minimum duration Δ2 and the third minimum duration Δ3 are each shorter than said period.

11. The control device of claim 10, wherein the first control module (12) is configured to send a first instance and at least a second instance of the process data to the second control module (14) within the first local cycle.

12. The control device of claim 10 or 11, wherein the second control module (14) is configured to send a first instance and at least a second instance of the response of the process data to the first control module (12) within the second local cycle.

13. The control device according to any one of claims 1 to 12, wherein the first control module (12) and the second control module (14) each have a fail-safe implemented processing unit (38) which enables a fail-safe execution of a user program and/or a fail-safe input/output of the process data.

14. The control device of claim 13, wherein the fail-safe implemented processing unit (38) is configured to ensure a fail-safe communication via the communication channel independent of a design of the communication channel and/or a fail-safe time monitoring on the respective first and second control module (12, 14).

15. Method for controlling an automated system, comprising:
connecting a communication channel, a first control module (12) and a second control module (14) for exchanging process data of the automated system,
wherein the first control module (12) generates process data at a first time t₁, sends the process data to the second control module (14) via the communication channel, receives a response to the process data from the second control module (14), and processes the process data at a fourth time t₄,
wherein the second control module (14) receives the process data from the first control module (12), processes it at a second time t₂, generates the response at a third time t₃, and sends it to the first control module (12),
wherein the times t₁, t₂, t₃, and t₄ are in chronological order,
wherein the first control module (12) and the second control module (14) ensure that, when communicating with each other, certain minimum durations between selected events are guaranteed in order to ensure a predetermined minimum time interval between two events,
wherein the first control module (12) and the second control module (14) jointly guarantee a first defined minimum duration Δ1 between the first time t₁ and the second time t₂ and/or a third minimum duration Δ3 between the third time t₃ and the fourth time t₄, and/or
wherein the second control module (14) guarantees a second minimum duration Δ2 between the second time t₂ and the third time t₃.

## Revendications

1. Dispositif de commande (10) permettant la commande d'un système automatisé, présentant :
un premier module de commande (12) ;
un second module de commande (14) ; et
un canal de communication par l'intermédiaire duquel le premier module de commande (12) et le second module de commande (14) échangent des données d'opération du système automatisé ;
dans lequel le premier module de commande (12) est configuré pour créer des données d'opération à un premier moment t₁, les envoyer au second module de commande (14) par l'intermédiaire du canal de communication, recevoir une réponse aux données d'opération provenant du second module de commande (14) et la traiter à un quatrième moment t₄,
dans lequel le second module de commande (14) est configuré pour recevoir les données d'opération provenant du premier module de commande (12), les traiter à un deuxième moment t₂, créer la réponse à un troisième moment t₃ et envoyer la réponse au premier module de commande (12),
dans lequel les moments t₁, t₂, t₃ et t₄ sont dans l'ordre chronologique,
**caractérisé en ce que** le premier module de commande (12) et le second module de commande (14) sont configurés pour certifier, lors d'une communication entre eux, des durées minimales déterminées entre des événements sélectionnés afin de garantir un intervalle de temps minimal prédéterminé entre deux événements, dans lequel le premier module de commande (12) et le second module de commande (14) sont configurés pour garantir conjointement une première durée minimale déterminée Δ1 entre le premier moment t₁ et le deuxième moment t₂ et/ou une troisième durée minimale déterminée Δ3 entre le troisième moment t₃ et le quatrième moment t₄, et/ou dans lequel le second module de commande (14) est configuré pour garantir une deuxième durée minimale déterminée Δ2 entre le deuxième moment t₂ et le troisième moment t₃.

2. Dispositif de commande selon la revendication 1, dans lequel le premier module de commande (12) et le second module de commande (14) sont configurés pour transmettre les données d'opération de manière redondante tout en assurant des propriétés temporelles afin de garantir la première durée minimale déterminée Δ1 et/ou la troisième durée minimale déterminée Δ3.

3. Dispositif de commande selon la revendication 2, dans lequel le premier module de commande (12) est configuré pour décaler une première instance des données d'opération à un moment tₐ dans une mémoire tampon d'émission (84) du canal de communication et décaler une seconde instance des données d'opération à un moment t_{b} dans la mémoire tampon d'émission (84) du canal de communication, afin de transmettre les données d'opération de manière redondante et de démarrer une première surveillance temporelle permettant de déterminer un premier intervalle de temps entre les moments tₐ et t_{b} et de ne décaler la seconde instance des données d'opération dans la mémoire tampon d'émission (84) que lorsque le premier intervalle de temps dépasse une valeur minimale déterminée.

4. Dispositif de commande selon l'une des revendications 1 à 3, dans lequel le second module de commande (14) est configuré pour décaler une première instance de la réponse à un moment tₐ dans une mémoire tampon d'émission (84) du canal de communication et décaler une seconde instance de la réponse à un moment t_{b} dans la mémoire tampon d'émission (84) du canal de communication, afin de transmettre la réponse aux données d'opération de manière redondante et de démarrer une deuxième surveillance temporelle permettant de déterminer un deuxième intervalle de temps entre les moments tₐ et t_{b} et de ne décaler la seconde instance de la réponse dans la mémoire tampon d'émission (84) que lorsque le deuxième intervalle de temps dépasse une valeur minimale déterminée.

5. Dispositif de commande selon l'une des revendications 2 à 4, dans lequel le second module de commande (14) est configuré pour démarrer une troisième surveillance temporelle permettant de déterminer un troisième intervalle de temps entre une réception d'une première instance des données d'opération et une réception d'une seconde instance des données d'opération uniquement lorsque le second module de commande (14) reçoit une première instance des données d'opération afin d'assurer les propriétés temporelles.

6. Dispositif de commande selon l'une des revendications 2 à 5, dans lequel le premier module de commande (12) est configuré pour démarrer une quatrième surveillance temporelle permettant de déterminer un quatrième intervalle de temps entre une réception d'une première instance de la réponse et une réception d'une seconde instance de la réponse uniquement lorsque le premier module de commande (12) reçoit une première instance de la réponse afin d'assurer les propriétés temporelles.

7. Dispositif de commande selon l'une des revendications 2 à 6, dans lequel la première instance des données d'opération et la seconde instance des données d'opération sont des télégrammes de données redondants des données d'opération et le premier module de commande (12) est configuré pour attribuer des numéros d'instance consécutifs à la première instance des données d'opération et à la seconde instance des données d'opération et/ou dans lequel la première instance de la réponse et la seconde instance de la réponse sont des télégrammes de données redondants de la réponse et le second module de commande (14) est configuré pour attribuer des numéros d'instance consécutifs à la première instance de la réponse et à la seconde instance de la réponse.

8. Dispositif de commande selon l'une des revendications 1 à 7, dans lequel le second module de commande (14) est configuré pour démarrer, au deuxième moment t₂, une cinquième surveillance temporelle permettant de déterminer un cinquième intervalle de temps par rapport au troisième moment t₃, et dans lequel le second module de commande (14) est configuré pour ne créer la réponse qu'au troisième moment t₃ après un écoulement de la deuxième durée minimale déterminée Δ2.

9. Dispositif de commande selon l'une des revendications 1 à 8, dans lequel le premier module de commande (12) est configuré pour envoyer et recevoir de manière cyclique les données d'opération, surveiller en tant que temps de rotation un nombre de cycles entre le premier moment t₁ et le quatrième moment t₄, et déclencher une action de sécurité si le temps de rotation dépasse une valeur déterminée.

10. Dispositif de commande selon l'une des revendications 1 à 9, dans lequel le premier module de commande (12) est configuré pour traiter les données d'opération selon un premier cycle local, dans lequel le second module de commande (14) est configuré pour traiter les données d'opération selon un second cycle local, dans lequel le premier cycle local et le second cycle local présentent la même durée de période mais ne doivent pas nécessairement être synchronisés, et dans lequel la première durée minimale déterminée Δ1, la deuxième durée minimale déterminée Δ2 et la troisième durée minimale déterminée Δ3 sont respectivement plus courtes que la durée de période.

11. Dispositif de commande selon la revendication 10, dans lequel le premier module de commande (12) est configuré pour envoyer, au cours du premier cycle local, une première instance et au moins une seconde instance des données d'opération au second module de commande (14).

12. Dispositif de commande selon la revendication 10 ou 11, dans lequel le second module de commande (14) est configuré pour envoyer, au cours du second cycle local, une première instance et au moins une seconde instance de la réponse des données d'opération au premier module de commande (12).

13. Dispositif de commande selon l'une des revendications 1 à 12, dans lequel le premier module de commande (12) et le second module de commande (14) présentent respectivement une partie de traitement (38) mise en œuvre de manière sécurisée contre les erreurs qui est configurée pour permettre une exécution sécurisée contre les erreurs d'un programme d'application et/ou une entrée et une sortie sécurisées contre les erreurs des données d'opération.

14. Dispositif de commande selon la revendication 13, dans lequel la partie de traitement (38) mise en œuvre de manière sécurisée contre les erreurs est configurée pour certifier une communication sécurisée contre les erreurs sur le canal de communication indépendamment d'une configuration du canal de communication et/ou permettre une surveillance temporelle sécurisée contre les erreurs sur le premier module de commande (12) et le second module de commande (14).

15. Procédé permettant la commande d'un système automatisé, présentant :
un canal de communication connecte un premier module de commande (12) et un second module de commande (14) pour l'échange de données d'opération du système automatisé ;
le premier module de commande (12) crée des données d'opération à un premier moment t₁, les envoie au second module de commande (14) par l'intermédiaire du canal de communication, reçoit une réponse aux données d'opération provenant du second module de commande (14) et la traite à un quatrième moment t₄ ;
le second module de commande (14) reçoit les données d'opération provenant du premier module de commande (12), les traite à un deuxième moment t₂, crée la réponse à un troisième moment t₃ et l'envoie au premier module de commande (12) ;
les moments t₁, t₂, t₃ et t₄ sont effectués dans l'ordre chronologique ;
le premier module de commande et le second module de commande certifient, lors d'une communication entre eux, des durées minimales déterminées entre des événements sélectionnés afin de garantir un intervalle de temps minimal prédéterminé entre deux événements,
dans lequel le premier module de commande (12) et le second module de commande (14) garantissent conjointement une première durée minimale déterminée Δ1 entre le premier moment t₁ et le deuxième moment t₂ et/ou une troisième durée minimale déterminée Δ3 entre le troisième moment t₃ et le quatrième moment t₄, et/ou dans lequel le second module de commande (14) garantit une deuxième durée minimale déterminée Δ2 entre le deuxième moment t₂ et le troisième moment t₃.
